# EUROPEAN PATENT APPLICATION

(11) **EP 4 844 640 A1**
(43) Date of publication of application: **25.11.2026**
(21) Application number: 25178319.7
(22) Date of filing: 22.05.2025
(51) Int. Cl.: G06N 5/022, G06N 20/00

(54) **METHOD AND DEVICE FOR OBSERVING AND RECTIFYING RETRIEVAL-AUGMENTED GENERATION SYSTEMS**

(71) Applicant: Siemens Aktiengesellschaft, 80333 München (DE)
(72) Inventor: The designation of the inventor has not yet been filed
(74) Representative: Siemens Patent Attorneys

(57) **Abstract**

The present disclosure provides a computer-implemented method for operating a Retrieval-Augmented Generation (RAG) system. The method includes defining a set of operations (V) for the RAG system, receiving an input query (Q), and maintaining a state of an agent in the RAG system. The state comprises a history of a conversation, outputs from executed operations, and the input query (Q). The method further involves executing a sequence of operations through operation nodes (Vi, Vj) to generate a response (A) to the input query (Q), storing a path (P) of the executed operations and the state that resulted in the response (A), and generating the response (A) via an output node (Vn). This method enables observability and tractability of the RAG system's internal state, facilitating problem identification and rectification.

## Description

The present disclosure relates to Retrieval-Augmented Generation (RAG) systems, and more particularly to methods and devices for observing and rectifying RAG systems to improve their reliability and performance.

Retrieval-Augmented Generation (RAG) systems have emerged as a powerful approach in natural language processing, combining the strengths of large language models with external knowledge retrieval. These systems aim to enhance the capabilities of language models by incorporating relevant information from external sources during the generation process.

RAG systems typically involve several components working in tandem. A retrieval component searches for and selects relevant information from a knowledge base or database. This retrieved information is then used to augment the input provided to a language model. The augmented input allows the language model to generate responses that are more informed and contextually appropriate.

The development of RAG systems has been driven by the need to address limitations of standalone language models, such as their tendency to generate inaccurate or outdated information. By incorporating external knowledge, RAG systems can potentially produce more reliable and up-to-date responses.

One of the most popular options is to use the "agentic flow" where the question asked by the user is handed over to an agent who iteratively prepares the answer by going through the following steps.
1. Planning: the agent creates a plan. The plan includes a rough order of execution of the tools available to the chatbot.
2. Tool execution: the agent transforms the user's query as input to the first tool and executes it. The return value from the tool is added to the context used later.
3. Reflection: After executing each tool the agent reflects on the plan it has created, the output of each tool, and any data it may have collected by executing the tools. As a result of this reflection, the agent may change the plan of action it has created earlier and execute a different tool.
4. The step 2 and 3 are executed iteratively until the agent determines that it has found the answer to the question.

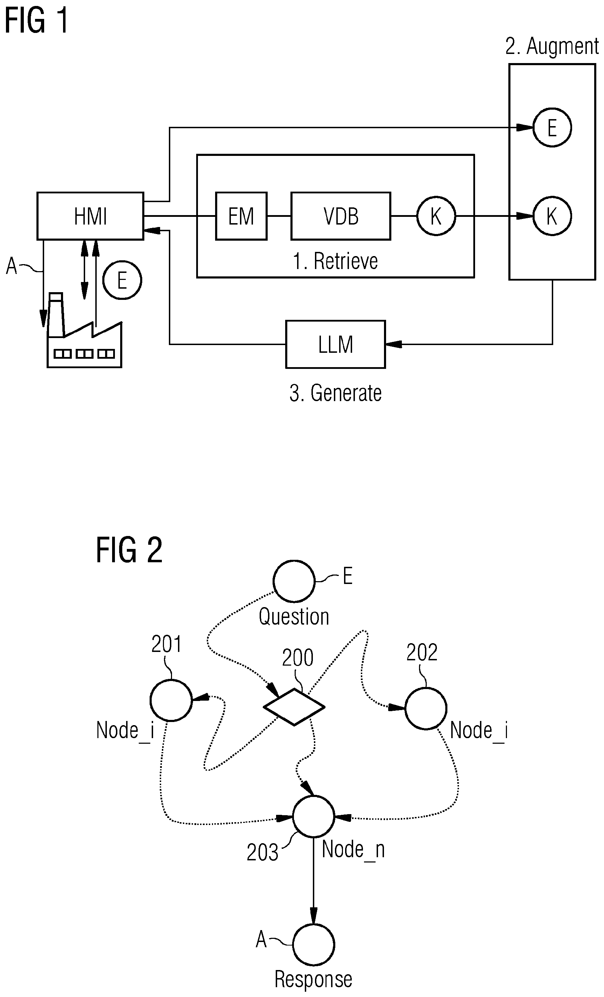

A common technique to control the flow of execution in RAG systems is to superimpose a graph on the flow. The graph comprises the nodes and edges as shown in Figure 2. There are two types of nodes in the graph. The nodes shown as circles, representing operational nodes, and a node shown as a diamond node, in Figure 2. In actual implementation there can be any number of circular or diamond shaped nodes. The circular shaped nodes show the operation nodes, with an atomic action that includes a call to an LLM. The diamond shaped node in Figure 2 represents a decision node. At this node the input is provided by the operational node and based on this input the decision node makes the decision which (operational) node should be executed next. Meaning this node acts as a branching node or an if condition. An LLM call may or may not be involved at this node. In most cases an LLM call is used in such nodes. The dotted lines in the figure show an arbitrary graph with any number of nodes Node_i, Node_j, Node_n and edges. This technique restricts the agentic flow to a certain level and provides some level of determinacy in the flow and hence in the results. Still, the presence of a graph does not mean that the state of the agent is observable and tractable.

However, the complexity of RAG systems introduces challenges in terms of observability and tractability. As these systems involve multiple components and processing steps, it can be difficult to trace the path of information flow and identify the source of errors or inconsistencies in the generated outputs.

Another challenge lies in the dynamic nature of the retrieval and augmentation processes. The selection of relevant information and its integration with the input query can vary based on factors such as the specific implementation of the retrieval mechanism and the state of the external knowledge sources. This variability can make it challenging to reproduce results consistently or to debug issues when they arise.

Furthermore, the interaction between the retrieved information and the language model's internal knowledge can lead to unpredictable outcomes. The language model may sometimes prioritize its pre-trained knowledge over the retrieved information, or it may struggle to coherently integrate the external data into its generated responses.

It has been appreciated that a method is needed that overcomes one or more of these problems.

### SUMMARY OF INVENTION

The above mentioned problems are solved by a computer implemented method comprising the features of claim 1. The problem is further solved by a computer program, and by a computer device as claimed in the independent claims.

In a first aspect, a computer-implemented method for operating a Retrieval-Augmented Generation (RAG) system is provided. The method includes defining a set of operations for the RAG system, receiving an input query, maintaining a state of an agent in the RAG system, wherein the state comprises a history of a conversation, outputs from executed operations, and the input query, executing a sequence of operations through operation nodes to generate a response to the input query, storing a path of the executed operations and the state that resulted in the response, and generating the response via an output node.

This method enables a structured and traceable approach to operating a RAG system, allowing for improved debugging and error tracking capabilities. By maintaining and storing the state and path of executed operations, the system becomes more transparent and easier to analyze. The set of operations may comprise a plurality of operation sets, each operation set containing multiple operations.

Organizing operations into distinct sets allows for better categorization and management of different types of operations within the RAG system, enhancing modularity and flexibility.

The method may further include selecting a first operation from a first operation set, executing the first operation through a first operation node, and updating the state based on an output of the first operation.

This step-by-step execution and state updating process ensures that the system's state accurately reflects the results of each operation, facilitating more precise tracking and analysis of the system's behavior.

The method may also include selecting a second operation from a second operation set based on the updated state, executing the second operation through a second operation node, and further updating the state based on an output of the second operation.

By iteratively selecting and executing operations based on the updated state, the system can adapt its processing dynamically, potentially leading to more accurate and context-aware responses.

The path may comprise a sequence of operations executed to generate the response.

Storing the sequence of executed operations provides a clear record of the decision-making process, which is important for understanding how the system arrived at a particular response. The method may further include automatically identifying a problem in the RAG system based on the stored path and state.

This automatic problem identification capability significantly enhances the system's ability to self-diagnose issues, potentially reducing debugging time and improving overall system reliability.

The method may also include automatically rectifying the identified problem by modifying at least one operation in the set of operations.

The ability to automatically rectify identified problems represents a significant advancement in RAG system maintenance and optimization, potentially reducing the need for manual intervention and improving system performance over time.

Modifying the at least one operation may comprise at least one of adding a new operation to the set of operations, removing an existing operation from the set of operations, or updating an existing operation in the set of operations.

This flexibility in modifying operations allows the system to evolve and adapt to new requirements or correct identified issues, contributing to the long-term effectiveness and relevance of the RAG system.

The RAG system may comprise an operation graph representing the set of operations and their relationships.

Utilizing an operation graph provides a visual and structural representation of the system's operations, which can aid in understanding complex relationships and dependencies within the RAG system.

The state of the agent may be observable and tractable throughout the execution of operations. Maintaining observability and tractability of the agent's state throughout the execution process enables real-time monitoring and analysis, to ensuring system reliability and performance.

Each operation in the set of operations may belong to exactly one operation set among the plurality of operation sets.

This strict categorization of operations ensures a clear and unambiguous organization of the system's functionalities, potentially simplifying maintenance and reducing conflicts between operations.

The method may be used in an industrial plant application.

Applying this method to industrial plant applications demonstrates its versatility and potential for improving complex, real-world systems that require sophisticated information processing and decision-making capabilities.

The method may further include processing the input query through a series of operation sets to generate the response.

This structured approach to query processing, utilizing a series of operation sets, allows for a systematic and potentially more thorough analysis of the input query, potentially leading to more accurate and comprehensive responses.

The operation graph may represent a left-to-right flow of information processing from the input query through multiple operation sets to the response generation.

Representing the information flow in a left-to-right manner in the operation graph provides a clear and intuitive visualization of the query processing pipeline, potentially aiding in system design, analysis, and optimization.

In a second aspect, a computer program comprising instructions which, when executed by a computer, cause the computer to carry out the method of the first aspect is provided. Implementing the method as a computer program allows for widespread deployment and execution across various computing platforms, enhancing the accessibility and applicability of the RAG system.

In a third aspect, a computer-readable medium comprising instructions which, when executed by a computer, cause the computer to carry out the method of the first aspect is provided. Storing the method instructions on a computer-readable medium ensures portability and ease of distribution, facilitating the implementation of the RAG system across different computing environments.

In a fourth aspect, a computer device comprising a processor and a memory is provided, wherein the memory comprises instructions stored thereon which, when executed by the processor, causes the computer device to perform the method of the first aspect.

Integrating the method into a dedicated computer device with specialized hardware components can potentially optimize the performance and efficiency of the RAG system, making it suitable for high-demand applications.

### BRIEF DESCRIPTION OF FIGURES

Embodiments of the invention will be described, by way of example, with reference to the following drawings, in which:
FIG. 1 illustrates a block diagram of a Retrieval-Augmented Generation (RAG) system used in an industrial environment, according to aspects of the present disclosure.
FIG. 2 depicts a sample graph to control the flow of an RAG system, as known in the state of the art.
FIG. 3 shows a block diagram of a RAG system with multiple operation nodes, according to an aspect of the present disclosure.
FIG. 4 illustrates a block diagram of a RAG system with operation sets and nodes, in accordance with example embodiments.
FIG. 5 shows an example of a pipeline

Common reference numerals are used throughout the figures to indicate similar features.

A commonly known Retrieval-Augmented Generation (RAG) system, as illustrated in FIG. 1, comprises several key components that work together to process input queries and generate informed responses. The system is structured into three main stages: Retrieve, Augment, and Generate.

In the Retrieve stage, the system receives an input query E e.g. through a Human-Machine Interface HMI. The query is then processed by an Embedding Model EM, which interfaces with a Vector Database VDB to retrieve relevant information. This stage can handle both static data, such as documents stored in the VDB, and dynamic data from other sources K.

The Augment stage involves operation nodes that process the retrieved information. These nodes represent a set of operations defined for the RAG system. The operations can include tasks such as selecting relevant tables, identifying pertinent columns, and formulating database queries for dynamic data retrieval. The system maintains a state of an agent, which includes the history of the conversation, outputs from executed operations, and the original input query.

In the Generate stage, a Large Language Model (LLM) receives input from the Augment stage and the HMI. The LLM processes this information to generate a response based on both the query and the retrieved data. The system can incorporate additional steps to improve output, such as re-ranking retrieved information and context selection.

The RAG system can be applied in various contexts, including industrial plant applications. In such scenarios, the HMI may serve as an interface between the system and factory operations, allowing for bidirectional communication and data exchange.

Throughout the process, the system maintains and updates the state of the agent, ensuring that each operation has access to the necessary context for informed decision-making and response generation. This approach allows the RAG system to provide more accurate and contextually relevant responses to user queries.

The Retrieval-Augmented Generation (RAG) system, as illustrated in FIG. 1, comprises several interconnected components that work together to process input queries and generate informed responses. The system includes a Human-Machine Interface (HMI), an Embedding Model (EM), a Vector Database (VDB), a Large Language Model (LLM), and operation nodes for input E and context K.

The HMI serves as the primary interface for receiving input queries and presenting generated responses. When a query is received through the HMI, the EM processes the input and interfaces with the VDB to retrieve relevant information. The VDB stores and manages vector representations of data, allowing for efficient retrieval of contextually relevant information.

The system employs a set of operations, which comprises multiple operation sets, each containing multiple operations. These operations can include tasks such as fetching relevant chunks of information from the VDB, preparing queries for dynamic data retrieval, fetching data from various sources, and refining the retrieved data. Each operation belongs to exactly one operation set among the plurality of operation sets, ensuring a clear and organized structure for the system's functionality.

The RAG system incorporates an operation graph that represents the set of operations and their relationships. This graph provides a visual and logical representation of how different operations interact and depend on each other, facilitating efficient execution and management of the system's processes.

When processing a query, the system executes a sequence of operations through operation nodes to generate a response. The state of the agent is maintained and updated throughout the execution of operations, ensuring that each step has access to the necessary context for informed decision-making. This state includes the history of the conversation, outputs from executed operations, and the original input query. By maintaining an observable and tractable state, the system can provide more accurate and contextually relevant responses.

The operation nodes for input E and context K play important roles in the system's functionality. The input E node processes the initial query, while the context K node manages additional contextual information that may be relevant to the query. These nodes work in conjunction with the other components to ensure that all relevant information is considered during the response generation process.

After the sequence of operations is executed, the final response is generated via an output node. This node consolidates the processed information and leverages the LLM to produce a coherent and informative response based on the input query and the retrieved and augmented data.

The structured approach of the RAG system, with its well-defined set of operations, operation graph, and coordinated information flow, enables efficient and effective processing of complex queries, resulting in more accurate and contextually relevant responses.

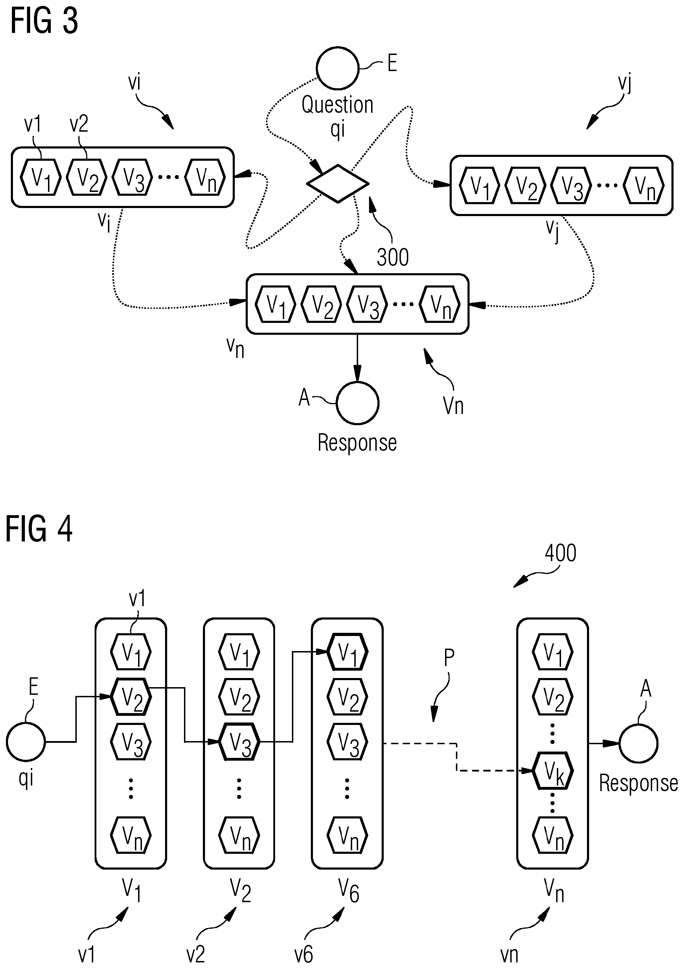

FIG. 3 illustrates the operation flow of the Retrieval-Augmented Generation (RAG) system analogous to the illustration in figure 2, including operation nodes and decision nodes. The process begins with a Query, input Q, which initiates the sequence of operations to generate a response.

The RAG system comprises multiple operation nodes and operation sets. An operation node Vi receives the initial query and begins processing. The system selects a first operation v1 from a first operation set V1. The first operation v1 is then executed through the operation node Vi. After execution, the system updates its state based on the output of the first operation v1. Following the execution of the first operation v1, the system selects a second operation v2 from a second operation set V2. This selection is based on the updated state resulting from the first operation. The second operation v2 is then executed through an operation node Vj. The state is further updated based on the output of the second operation v2.

This process of selecting and executing operations continues through a series of operation sets, with each operation contributing to the evolving state of the system. The path P of executed operations is stored along with the state that results from each operation. This path P comprises the sequence of operations v1, v2, v3, ... executed to generate the response.

As the system processes the input query Q through the series of operation sets, it gradually builds towards the final response. The final stage of processing occurs at an output node, response Vn. This node consolidates the processed information from all previous operations and generates a response, answer A to the original query.

The structured flow of operations, from the initial query through decision nodes 300 and multiple operation nodes and sets, to the final output node, ensures a systematic and traceable process for generating responses in the RAG system. By maintaining and updating the state throughout the execution of operations, the system can provide contextually relevant and accurate responses to complex queries.

The operation graph 400 of the Retrieval-Augmented Generation (RAG) system, as illustrated in Fig 4, represents a structured approach to processing queries and generating responses. The operation graph 400 comprises multiple operation sets, including the first operation set V1, the second operation set V2, and a next operation set V6. Each operation set contains multiple operations, represented by hexagonal shapes within the sets.

The system processes the Query, input Q through a series of operation sets to generate the response, answer A. This left-to-right flow of information processing begins with the first operation set V1, which includes the first operation v1. The system selects and executes operations from each set based on the current state and requirements of the query processing. As the system moves through the operation sets, the operation node Vi and operation node Vj execute the selected operations. The state of the system is continuously updated based on the outputs of these operations. This process continues through subsequent operation sets, including the second operation set V2 and the sixth operation set V6, until the system reaches the output node, response A.

The operation graph 400 allows for modification of operations to improve system performance. New operations can be added to an operation set, existing operations can be removed, or operations can be updated as needed. This flexibility enables the system to adapt to new requirements or improve its processing capabilities.

The RAG system can automatically detect problematic sets of operations and handle issues when possible. By storing the path of executed operations and the system state, the system can backtrack from the final desired output to identify which operation led to a deviation in the response. This capability allows for automatic identification of problems based on the stored path and state.

When the system receives negative feedback on a generated response, the system can ask the user for the correct response. Using this information, the system can automatically identify and rectify problems in offline mode. This process involves analyzing the stored path and state, and may result in modifying at least one operation in the set of operations to improve future performance.

If the system encounters a problem that cannot be automatically identified or rectified, the system can leave these unidentified problems for human users to fix. This human intervention may involve manually modifying operations or adjusting the operation graph 400 structure to address complex issues.

The structured approach of the operation graph 400, with its multiple operation sets and clear flow of information processing, enables the RAG system to handle complex queries efficiently and generate accurate responses. The system's ability to automatically identify and rectify problems, combined with the flexibility to modify operations, contributes to the continuous improvement and adaptability of the RAG system.

### System Overview

The proposed RAG system, similar to the above also has an agent, but its method of execution is completely different from an agent that follows the above-mentioned agentic flow.

The proposed system has an agent *A*, but contrary to the above system the agent can only choose from a finite number of operations. The collection of operations from which the agent can choose can be named a set ***V*.** The desired response can only be achieved by executing the operation in a certain order. The operations can also be viewed as vertices ***V*** in a graph ***G***. The aim is to find a path ***P*** from a starting node *v*₁ ∈ ***V*** to the goal node *l* ∈ ***V**.* If the agent reaches the vertex *l* then this means that the desired response is prepared by the agent, otherwise, the agent ends in an arbitrary node *vₙ* ∈ ***V**.*

The state *sᵢ* ∈ ***S*** of the agent is maintained by the execution of operations. Typically, the state comprises of history *hᵢ* ∈ ***H*** of the conversation, the output from each operation *vᵢ*, and users' question *qᵢ* ∈ **Q**. If the set of all possible outputs from operations *vᵢ* is named ***O***, then ***S*** c ***Q × H × O.***

The path ***P*** is constructed by the agent with the help of LLM in a step-by-step manner. The agent starts in *s* ∈ ***S*** that already contains the users' question *q* ∈ ***Q*** and the history of the conversation. The state s is presented to the LLM and it is asked to choose an operation node *v*₁ from ***V***. After executing the first operation, the agent updates its state *s* based on the output of the node *v*₁. The updated state *s* is now presented to the LLM to choose the next operation *v*₂. This process continues until the goal node *l* ∈ ***V*** is achieved. In the end, the state s contains the output from *l* and hence also the correct answer to the question *q* which is presented to the user. Otherwise, the agent goes into an error state.

Contrary to the agent with the traditional agentic flow, the proposed agent always stores the path ***P*** and the state *s* that resulted in the response to the question *q*. If the response to the question *q* is not correct the path ***P*** can be inspected and the mistake made by the LLM is identified. For example, one cause could be that there was no appropriate operation *v* available in ***V*** that could satisfy the problem presented to the LLM, so the LLM chose an operation *v* that lead to the wrong conclusion. In this case, an adequate operation *v* can be added into ***V*** so that the next time LLM can choose the correct operation if presented with the same state (question).

### Operation Nodes

The presented solution, unlike a traditional RAG pipeline that relies on an agentic flow with an unknown path of execution, depends on a definite set of operations *v* ∈ ***V***. While the number of elements in the set ***V*** can increase, they remain constant during the agent's preparation of a response. This characteristic ensures that no new operations can be defined during response preparation, making the system both deterministic and tractable. Initially, the operations in ***V*** are defined by the engineer designing the RAG system. However, if the response generated by the system is not approved by the user, the system undergoes a process to create new operations. A typical list of operations defined by the engineer, in the beginning, depends completely on the system under consideration. For example, when designing a system to answer questions using both dynamic data streams and static data, several key operations must be considered. The static data, typically in the form of documents, is accessed through operations that fetch relevant chunks from a vector database. On the other hand, dynamic data, stored in a database, is retrieved using specific queries. So there needs to be operations for both static and dynamic data to perform operations like; fetching relevant chunks (static data), preparing queries (dynamic data), fetching data, and refining data (dynamic data).

Typically, the granularity of these should be very fine. Rather than expecting the LLM to figure out the type of query to generate, a template must be provided to perform very fine-grained operations. For example, a typical sequence of operations that will be performed to fetch dynamic data could be the following
- An operation that selects relevant tables
- An operation that selects relevant columns for the selected tables
- An operation that identifies the type of operator to be used on the selected columns, for example, element in the where clause, order by clause, and group by clause
- An operation that collects everything above and creates a query to fetch the data

Compared to the above the current methodologies describe what the user wants to achieve and leave it to a federation of LLM-powered agents to write down the relevant query, making the system unobservable and intractable.

The initial population of the set ***V*** includes all such operations populated by the engineer according to the domain that the chatbot is dealing with. After the initial population, another algorithm is used to generate new operations that are added to the set ***V***, details of which are coming shortly.

### Defining Pipeline

The question of how the Retrieval-Augmented Generation (RAG) system operates in the absence of a traditional agentic flow is indeed pertinent. The RAG system must employ a pipeline mechanism that transitions the chatbot agent from one state to another.

The proposed methodology is entirely agnostic regarding the specific pipeline, or the tools used to design it. This flexibility allows for a wide range of implementations without being constrained to a particular framework or technology.

Regardless of the pipeline's design, each step within the pipeline must serve a distinct and designated purpose. The pipeline should not function as an open-ended conversation among various agents. Instead, it should consist of nodes, each tasked with a specific function. For instance, one node might be responsible for selecting relevant tables, while another might focus on selecting pertinent columns. This structured approach is necessary to use the proposed technique.

The above restrictions imply some constraints over the set ***V***. When each node in the pipeline has to do a certain type of task, then this means that the operation performed by each node is a subset of ***V***. If the operations performed by node 1 are in the set ***V*₁**, and operations performed by node 2 are in the set ***V*₂**, so on and so forth, then ***V*₁** ∪ ***V₂*** ∪ ***V***₃**...** ∪ ***Vₙ*** ⊆ ***V***, also for all *i* and*j* where 1 ≤ *i,j* ≤ *n*, the intersection of any two sets is an empty set i.e. ***Vᵢ*** ∩ ***Vⱼ*** = ∅. This means that the sets **V₁, V₂, V₃ ... *Vₙ*** are partitions of ***V***. This also means that each vertex *v* in the path *P* must belong to one and only one set among ***V*₁, V₂, V₃ ... *Vₙ***. Comparing the proposed system with the traditional RAG system presented in **Fehler! Verweisquelle konnte nicht gefunden werden.,** the proposed system would convert the sample system in the figures.

For a given question *qᵢ* ∈ ***Q***, the choices taken from the question *qᵢ* to the final Response constitute the path ***P***. For example, figure 4 shows an arbitrary run through an arbitrary graph. Every question *qᵢ* must go through a unique chain of nodes *v* ∈ ***V*₁**, *v* ∈ ***V*₂**, *v* ∈ ***V*₃** ... *v* E ***V*** to prepare the response and there cannot be any cycles in this chain.

The above restrictions play an important role in the observability and tractability of the system. First, as the state *s* ∈ ***S*** for each question *q* ∈ ***Q*** is largely dependent on the choices made for *vᵢ* at every node in the pipeline. The problem of identifying the reason for a bad answer is reduced to finding one of the following options
1. The operation with correct semantics was not available in the relevant set*Vᵢ*
2. The correct operation was available, but the wrong operation was chosen
3. The selected operation was the best, but it did not generate the correct response

Constraining the problem identification to the above-mentioned steps plays a key role in problem analysis and solution preparation.

### Automatic Problem Identification and Solution

A key aspect of problem identification is that it is done in offline mode. When a user provides negative feedback to an answer, the problem identification only starts after that in an offline mode. Doing this in offline mode lifts the restrictions of producing results in a short amount of time. The process of problem identification and solution preparation may take a few hours, but because it is automated and offline, there is no effect on the performance of the chatbot. When a user provides negative feedback to a response generated by the chatbot, the chatbot asks the user to give the correct response. The solution process completely depends on the response provided by the user. The idea is to backtrack from the final desired output (the response provided by the user) and identify which operation led to deviation in the response. Following is the Algorithm **(Algorithm-1)** to identify the problematic set ***Vₚ*** and rectify the problematic operation in the set.

Input to the algorithm is path ***P*** that leads to state *s_{f}.* The algorithm back tracks operation by operation and analyzes the state to identify the problematic operation. Initially the state *s* = *s_{f}* is the final state that led to the erroneous response. It is retrieved from the storage and then algorithm starts.
1. The last node *vₙ* from the path ***P*,** and the output of the node *vₙ* from the state s is extracted and removed.
   ∘ If there is no node *vₙ* left in the path to remove, then we save the question, the complete state *s_{f},* and the desired answer in separate storage and leave it to the engineer for further analysis. The algorithm terminates in this situation.
2. The updated state s is presented to the LLM without providing a set of operations to choose from, and it is asked to answer the question. Now the LLM would have to generate an operation without looking at the already populated set of operations.
3. Different actions are taken based on the output of the LLM
   ∘ If the LLM generates the same operation as before which leads to the answer as before, then this means that the problem is in a previous node. In this case, the execution goes to step 1.
   ∘ If the LLM executes a different operation and the generated output is different from the previous one, then the rest of the chain is executed in a normal way to see if the desired answer is achieved or not.
      ▪ If the desired answer is not achieved, then the execution goes to step 1.
      ▪ If the desired answer is achieved, then the execution goes to step 4. The set associated with the current node is the problematic set ***Vₚ***.
4. Reaching this step means that the problematic set ***Vₚ*** is found, and the correct operation is also found.
   ∘ If the currently selected operation is already in ***Vₚ***, then the previously selected operation is deleted because this means that the previous operation caused the chain to go in the wrong direction.
   ∘ If the currently selected operation is not in ***Vₚ***, then we add the newly selected operation to the ***Vₚ*.** Note that in step 4, there was no restriction on the LLM to choose an operation only from the already present operations, rather the LLM could generate new operations.

The above algorithm automatically detects the problematic set of operations and handles the issues if it can. If there is a problem that it cannot identify, then that is left for the human user to fix. A human user can take similar actions of adding, updating, or removing operations for the operation set and see if the problem is solved or not.

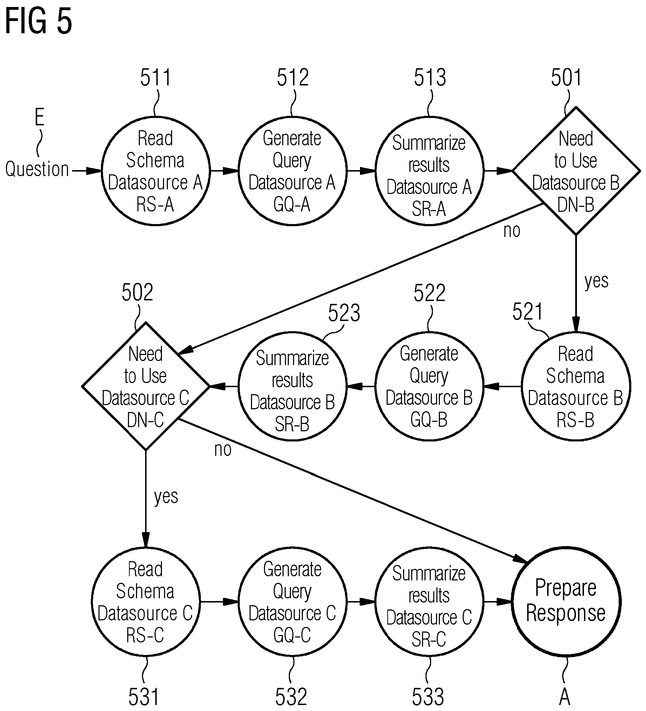

An Example for the method is explained in the following and depicted in Figure 5.

Suppose there is an industrial plant comprising multiple departments such as production, sales, and inventory, there is often a need to unify access to diverse data sources. To address this, the plant aims to develop a chatbot that serves as a centralized interface capable of interacting with various departmental databases.

For the sake of argumentation let us suppose that the HR database can be referred to as Data Source A, the inventory system as Data Source B, and the production department's data as Data Source C.

When a user interacts with the chatbot, the nature of the query determines how the data is retrieved. In some cases, the chatbot must aggregate and synthesize information from multiple sources to generate a comprehensive response. In other scenarios, it may only need to query a single, most relevant data source. This dynamic requirement necessitates the design of flexible and intelligent data retrieval workflows.

To accommodate these needs, several pipeline architectures can be employed:
1. Sequential Retrieval Workflow: This pipeline queries data sources in a predefined order ensuring that the most efficient path is taken first.
2. Parallel Retrieval Workflow: In this setup, multiple data sources are queried simultaneously, significantly reducing response time and allowing for real-time aggregation of information from departments like inventory, HR, and production.
3. Iterative Refinement Workflow: Here, the chatbot refines its queries based on intermediate results. If the initial response is insufficient, it reformulates the query or targets a different data source to improve the answer quality.
4. Loop Until Confident Workflow: This approach involves querying sources iteratively until a confidence threshold is met. It ensures that the chatbot only responds when it has gathered sufficiently reliable information.
5. Agent-Based Decision Workflow: An intelligent agent evaluates the user's intent and dynamically routes the query to the most appropriate data source-be it HR, inventory, or production-based on contextual understanding.

All the above workflows come with different benefits and shortcomings. The techniques from 3 to 5 typically rely on iterative query and evaluation of the data sources. This may improve results in some situations, but these techniques do not allow automatic problem identification and rectification using the method prescribed above. As the invention enforces, the operations executed by the agent must not be cyclic. In the path from *V*₁ to *Vₙ* no node *V* should be repeated. So, the example given below is only relevant to the first two techniques.

Figure 5 shows an exemplary pipeline, that may be used by a chatbot to prepare responses.

In the example pipeline there are eleven nodes 511, 512, ... before the final node named "Prepare Response", A. Within those there are two decision nodes named "Need to use Data source B (DN-B)" 501 and "Need to use Data source C (DN-C)", 502. Both check whether the question is relevant to data source B or C. If the question is relevant to the data source, then the agent takes the path "yes" that goes through the process of including information from that Data source 521, 522, 523 bzw. 531, 532, 533, otherwise the agent takes a path "no" that skips that data source.

It is assumed that the technology of Data source A, B and C is different so all of them need a different context and prompt to generate the code and then use their data.

Using the graph in Fig. 5 a traditional flow of execution would work as follows.
- For "Read Schema (RS-A/B/C)" nodes 511, 521, 531 for each data source a pipeline will query the data source schema and get all the information that is available. For this LLM will be called to generate the query to get the schema. The schema will be passed on to the next node. These nodes can also eliminate the need to call LLM if the schema is constant.
- For "Generate Query (GQ-A/B/C)" nodes, 512, 522, 532 the LLM will be asked to compare the question with the schema and come up with a query to retrieve the results. The query will be passed on to the next node.
- For "Summarize Results (SR-A/B/C)" nodes, 513, 523, 533 the query will be executed, and the results will be given to LLM for summarization. The summary will be passed on to the next node.
- For "Decision Nodes (DN-B/C)" 501, 502 the context will be checked, and the decision will be taken to choose the path.

Using the classical approach as known in the state of the art, there can be errors at the following nodes:
- The "Read Schema" 511, 521, 531 nodes can be considered static if the schema of the data source does not change. Otherwise, a wrong query generated by LLM can fetch wrong schema representation.
- The "Generate Query" nodes 512, 522, 532 may generate wrong queries even if the schema is correct. If the schema is not correct, then "Generate Query" node is obviously going to generate something erroneous.
- The query inside "Summarize Result" 513, 523 ,533 nodes depend on their previous nodes. If the output of the previous node is correct then, this node would get the correct data, but while summarizing the data, it may introduce some errors.
- At both "Decision Nodes" 501, 502 wrong decisions are possible. Resulting into wrong branching and leading to wrong responses.

Let us now see how the example problem will change when it is converted into a solution as proposed herein.
- Without any loss of generality, for the sake of simplicity we assume that the schema is constant and so as the nodes "Read Schema (RS-A/B/C)" 511, 521, 531 are also constant.
- For the nodes "GQ-A/B/C" 512, 522, 532 we define which operations are possible on Data source A, B and C. Here are a few functions as an example
   ∘ List values: lists the values of a column that is pertinent to the questions. Let us name them as *LV_{A}* that can list the values from Data source A, *LV_{B}* to list the values from Data source B, *LV_{C}* to list the values from Data source C.
   ∘ Find minimum: finds the minimum value of a certain column. Again, we name them as *Min_{A}, Min_{B},* and *Min_{C}* to associate them with different data sources.
   ∘ Find maximum: finds the maximum values of a certain column. Again, we name them as *Max_{A}, Max_{B},* and *Max_{C}* to associate them with different data sources.
- For "Summarize Results (SR-A/B/C)" nodes 513, 523, 533 there needs to be one function each, that is able to understand the results returned from each Data source and can interpret them in natural language so that LLM can also understand it. So, each node has only one function
   ∘ To summarize results from Data source A we have a function named *SR_{A}.*
   ∘ To summarize results from Data source A we have a function named *SR_{B}.*
   ∘ To summarize results from Data source A we have a function named *SR_{C}.*
- The "Decision Nodes" 501, 502 do not require special treatment as they are already working like a function.

### Examples of Failure Scenarios:

Let us assume the following scenarios where the response is not generated according to expectation.
1. At the node GQ-C 532 the function *Min_{C}* should have been called, but instead *Mar_{C}* was called.
2. At the node "DN-C" 502 a wrong decision was taken. User wanted to include information from Data source C but the decision took the path in the direction of "No", so the Data source C was not used.
3. At the node GQ-C 532 the requirement was to calculate the average of values, but no relevant function was available. So LLM chose *LV_{C}* because this was the closest option available.

### Handling Failure Scenario 1

This scenario depicts a situation where LLM has chosen the wrong function in one of the nodes. The correct function is already available in this scenario. The proposed algorithm will follow the following steps:
- The algorithm will first backtrack to node SR-C, 533 here it will find only one function available. It will execute the same function and will get the same response as the old one. So, it will move to the next step.
- Backtracking to node GQ-C 532 the algorithm will see that there are three possible functions available. It will provide the context to the LLM that the schema is constant the previous result was not correct. It will provide three already available functions to LLM as an example, but this time LLM is not limited to choose from them. In problem solving mode, the LLM is allowed to generate new functions if needed. Please see Algorithm for details.
- Based on this information the LLM will now choose the function *Max_{C}* instead of *Min_{C}*. The algorithm will compare the results and see that there is a difference between the old and the new output.
- The algorithm will run the rest of the chain with the new output from the node GQ-B, 532. As the correct function was chosen this time, when the user sees the correct answer, they will provide positive feedback.

### Handling Failure Scenario 2

This scenario depicts a situation in which the wrong decision is made by LLM in one of the nodes. This is different from the previous case, because it is relevant to a decision node. The algorithm will follow the following steps to solve the issue
- The nodes SR-C, 533, GQ-C, 532 and RS-C, 531 will be executed backtracking the problem, but each node will produce the same output.
- The node DN-C 502 will be executed with the information that in the previous run the answer was not correct. With this new information the LLM will generate the correct decision to use Data source C.
- The algorithm will see that there is a difference in new and old output, so it will execute the rest of the chain getting the correct result A. The user will provide a positive feedback on seeing the correct result A.

### Handling Failure Scenario 3

This scenario depicts a situation in which the correct function is not even available in the node. The algorithm will follow the following steps to solve the issue
- The node SR-C 533 will be executed, and the same output will be observed taking control to the node GQ-C 532.
- At node GQ-C 532 the algorithm will see that there are three possible functions available. It will provide the context to the LLM that the previous result was not correct. It will provide three already available functions to the LLM as an example, but the LLM is not limited to choose from them. In problem solving mode, the LLM is allowed to generate new functions if needed. Please see Algorithm for details.
- Based on the more detailed context, the LLM generates a new function named *Avg_{C}* that takes the average of a column in Data source C.
- Now because the output is different from the previous output, the algorithm runs the rest of the chain and generates the correct answer A. The user provides positive feedback to ascertain that this was the correct decision.
- The function *Avg_{C}* is permanently added to the node GQ-C because it provided the correct results.

The claimed devices may include one or more processors, such as microprocessors, controllers, or other suitable types of processors, capable of executing instructions to control the device's operation. For example, in some implementations using a system-on-a-chip architecture, the processors may include fixed-function blocks (hardware accelerators) that perform parts of the method in hardware rather than software or firmware. Platform software, such as an operating system or similar, may be installed to support the execution of application software.

The described functionality may be implemented in hardware, software, or any combination thereof. When implemented in software, the instructions or code can be stored on or transmitted via a computer-readable medium. Such media include computer-readable storage media, which may be volatile or non-volatile, removable or non-removable, and implemented using any technology for storing information such as program code, data structures, or other data. Examples include, but are not limited to, ROM, EEPROM, RAM, magnetic or optical storage, flash memory, or any other storage medium accessible by a computer. Communication media that facilitate the transfer of software, such as via coaxial cables, fiber optics, DSL, or wireless signals, may also be considered part of computer-readable media.

Alternatively, or in addition, some or all of the described functionalities may be implemented using hardware logic components. Examples include, but are not limited to, application-specific integrated circuits, system-on-a-chip systems, field-programmable gate arrays, application-specific standard products, and complex programmable logic devices. In some cases, software instructions may also be implemented in dedicated circuits, such as programmable logic arrays or digital signal processors.

The computing device may operate as a standalone system or as part of a distributed system, where tasks are performed collectively by multiple devices connected via a network. Such devices may communicate over a network connection to perform the described functionality. For instance, software may be stored on a remote computer and accessed by a local device, which may download and execute portions of the software as needed. Similarly, some instructions may be processed locally, while others may execute on remote systems or networks. In some cases, the computing device may be remote and accessible via a communication interface. Storage of program instructions may also be distributed across a network or stored in a combination of local and remote locations. For example, software may reside on a remote computer and be accessed by a local terminal, or the system may execute some software locally while other components operate on remote servers.

Features of any of the examples or embodiments outlined above may be combined to create additional examples or embodiments without losing the intended effect. It should be understood, that the description of an embodiment or example provided above is by way of example only, and various modifications could be made by one skilled in the art. Furthermore, one skilled in the art will recognise that numerous further modifications and combinations of various aspects are possible. Accordingly, the described aspects are intended to encompass all such alterations, modifications, and variations that fall within the scope of the appended claims.

## Claims

1. A computer-implemented method for operating a Retrieval-Augmented Generation (RAG) system, the method comprising:
defining a set of operations (V) for the RAG system;
receiving an input query (Q);
maintaining a state of an agent in the RAG system, wherein the state comprises a history of a conversation, outputs from executed operations, and the input query (Q);
executing a sequence of operations through operation nodes (Vi, Vj) to generate a response (A) to the input query (Q);
storing a path (P) of the executed operations and the state that resulted in the response (A); and
generating the response (A) via an output node (Vn).

2. The method of claim 1, wherein the set of operations (V) comprises a plurality of operation sets (V1, V2, V6), each operation set containing multiple operations.

3. The method of claim 1 or 2, wherein executing the sequence of operations comprises:
selecting a first operation (v1) from a first operation set (V1);
executing the first operation (v1) through a first operation node (Vi); and
updating the state based on an output of the first operation (v1).

4. The method of any of claims 1 to 3, further comprising:
selecting a second operation (v2) from a second operation set (V2) based on the updated state;
executing the second operation (v2) through a second operation node (Vj); and
further updating the state based on an output of the second operation (v2).

5. The method of any of claims 1 to 4, wherein the path (P) comprises a sequence of operations (v1, v2, v3, ...) executed to generate the response (A).

6. The method of any of claims 1 to 5, further comprising: automatically identifying a problem in the RAG system based on the stored path (P) and state.

7. The method of claim 6, further comprising:
automatically rectifying the identified problem by modifying at least one operation in the set of operations (V).

8. The method of claim 7, wherein modifying the at least one operation comprises at least one of:
adding a new operation to the set of operations (V);
removing an existing operation from the set of operations (V); or
updating an existing operation in the set of operations (V).

9. The method of any of claims 1 to 8, wherein the RAG system comprises an operation graph (400) representing the set of operations (V) and their relationships.

10. The method of any of claims 1 to 9, wherein the state of the agent is observable and tractable throughout the execution of operations.

11. The method of any of claims 1 to 10, wherein each operation in the set of operations (V) belongs to exactly one operation set among the plurality of operation sets (V1, V2, V6).

12. The method of any of claims 1 to 11, wherein the method is used in an industrial plant application.

13. The method of any of claims 1 to 12, further comprising:
processing the input query (Q) through a series of operation sets (V1, V2, V6) to generate the response (A).

14. The method of any of claims 1 to 13, wherein the operation graph (400) represents a left-to-right flow of information processing from the input query (Q) through multiple operation sets (V1, V2, V6) to the response generation.

15. A computer program comprising instructions which, when executed by a computer, cause the computer to carry out the method of any of claims 1 to 14

16. A computer-readable medium comprising instructions which, when executed by a computer, cause the computer to carry out the method of any of claims 1 to 14

17. A computer device comprising a processor and a memory, wherein the memory comprises instructions stored thereon which, when executed by the processor, causes the computer device to perform the method of any of claims 1 to 15.
